# EUROPÄISCHE PATENTSCHRIFT

(11) **EP 1 941 340 B1**
(45) Veröffentlichungstag und Bekanntmachung des Hinweises auf die Patenterteilung: **03.07.2013**
(21) Anmeldenummer: 06806890.7
(22) Anmeldetag: 29.09.2006
(51) Int. Cl.: G06F 1/32, B60R 16/03

(54) **Vorrichtung zum Wecken eines in einem Kraftfahrzeug eingesetzten Steuergerätes**
Apparatus for waking a controller employed in a vehicle
Appareil pour réveiller un contrôleur dans une véhicule

(30) Priorität: 25.10.2005 DE 102005051397; 27.01.2006 DE 102006004038
(43) Veröffentlichungstag der Anmeldung: 09.07.2008
(73) Patentinhaber: Continental Automotive GmbH, 30165 Hannover (DE)
(72) Erfinder: FERGER, Andreas, 65812 Bad Soden (DE); ZIMMER, Manfred, 55218 Ingelheim (DE)
(86) Internationale Anmeldenummer: PCT/EP2006/066913
(87) Internationale Veröffentlichungsnummer: WO 2007/048680

(56) Entgegenhaltungen:
- WO-A-2004/048156
- DE-A1- 10 033 257
- DE-B3- 10 330 451

## Beschreibung

Die Erfindung betrifft eine Vorrichtung zum Wecken eines in einem Kraftfahrzeug eingesetzten Steuergerätes, um dieses von einem Ruhezustand in einen Betriebszustand zu versetzen, wobei die Vorrichtung zumindest einen Eingang zur Zuführung eines Wecksignals und ein Schaltmittel aufweist.

DE 103 30 451 B3 offenbart eine Vorrichtung zum Wecken eines Steuergerätes mit einem Weckmittel, welches bei dessen Betätigung eine Stromversorgung durchschaltet, um das Steuergerät von einem Ruhezustand in einem Betriebszustand zu versetzen, wobei das Weckmittel in Serie zu einem ersten Kondensator und einem Widerstand zwischen Stromversorgungsleitungen geschaltet ist. Zwischen dem ersten Kondensator und dem Widerstand ist ein Mittenabgriff vorgesehen, der mit dem Steuereingang eines ersten Transistors verbunden ist, der erste Transistor ist mit einem zweiten Transistor verbunden, der den Versorgungsstrom für das zu weckende Steuergerät durchschaltet, und vom zweiten Transistor ist eine Verbindungsleitung zum Knoten zwischen Mittenabgriff und Steuereingang des ersten Transistors zurückgeführt.

Die DE 100 33 257 A1 beschreibt eine Vorrichtung zum Wecken eines Steuergerätes mit den Merkmalen des Oberbegriffs des Patentanspruchs 1.

Bei ausgeschalteter Zündung eines Kraftfahrzeuges sollte ein in dem Kraftfahrzeug eingesetztes Steuergerät möglichst wenig Strom verbrauchen, um die Batterie nicht unnötig zu belasten und so ein Anlassen des Motors auch nach sehr langen Betriebspausen des Kraftfahrzeugs zu ermöglichen. Dieser Zustand bei dem das Steuergerät möglichst wenig Strom verbraucht wird auch als Ruhezustand bezeichnet.

Trotz dieser Forderung soll das Steuergerät aber über verschiedene Eingänge oder über CAN-Signale (zweiadriger Bus, der Steuergeräte im Fahrzeug vernetzt) geweckt werden können, um das Steuergerät in einen Betriebszustand zu versetzten und so eine schnelle Verfügbarkeit des Gerätes auf Fahrerwunsch zu ermöglichen.

Die Aufgabe der Erfindung ist es eine effiziente Vorrichtung zum Wecken eines in einem Kraftfahrzeug eingesetzten Steuergerätes zur Verfügung zu stellen.

Erfindungsgemäß wird die Aufgabe dadurch gelöst, dass des integrierte Schaltkreis die Teilschaltung aufweist und dass das wecksignal durch einen Schalter realisiert ist, der den Eingang mit einem negativen oder einem positiven Pol einer in dem Kraftfahrzeug vorhandenen Batterie verbindet. Die Vorrichtung weist den Vorteil auf, dass sie einen sehr geringen Rühestrombedarf von wenigen Mikroampere hat. Der bei nicht vorhandenem Wecksignal fließende Ruhestrom wird durch Leckströme verursacht.

In einer vorteilhaften Ausgestaltung der Erfindung weist die Teilschaltung des integrierten Schaltkreises zumindest einen Inverter auf. Inverter, und somit auch die Vorrichtung, können kostengünstig realisiert werden.

In einer weiteren vorteilhaften Ausgestaltung realisiert die Teilschaltung des integrierten Schaltkreises die Funktion eines Schmitt-Triggers. Ein Schmitt-Trigger stellt einen hysteresebehafteten Schalter dar, d. h. einen Schalter, bei dem Ein- und Ausschaltpegel nicht den gleichen Wert haben, sondern sich um eine S.chalthysterese unterscheiden. Ein ungewolltes Wecken des Steuergerätes wird durch diese Maßnahme verhindert.

In einer weiteren vorteilhaften Ausführung erfolgt eine Einstellung von Schaltschwellen des Schmitt-Triggers durch die Höhe der Versorgungsspannung des integrierten Schaltkreises. Hierdurch wird eine Anpassung der Vorrichtung an verschiedene Anforderungen auf einfache Weise ermöglicht. Nur wenn die Spannung des Wecksignals innerhalb eines bestimmten Bereiches liegt, erfolgt das Wecken des Steuergerätes. Eine Realisierung unterschiedlicher Schaltschwellen mit Hilfe von Operationsverstärkern wird durch diese Ausführung entbehrlich und somit werden Kosten und der Ruhestrombedarf verringert.

Vorteilhaft ist der integrierte Schaltkreis durch einen Logikbaustein realisiert. Unter Logikbausteine werden integrierte Schaltkreise zusammengefasst, die logische Verknüpfungen wie ODER oder UND, usw. realisieren. Durch die Verwendung eines Logikbausteines kann die Vorrichtung kostengünstig hergestellt werden.

Ferner ist es vorteilhaft, wenn der integrierte Schaltkreis CMOS-Schaltungen umfasst, da der Strombedarf von CMOS-Schaltungen besonders gering ist.

In einer weiteren vorteilhaften Ausführung ist das Schaltmittel durch einen Transistor realisiert. Transistoren, und somit auch die Vorrichtung, können besonders kostengünstig hergestellt werden.

Vorteilhaft umfasst die Vorrichtung mehrere Eingänge zur Zuführung mehrerer Wecksignale. Das Wecken des Steuergerätes wird damit durch mehrere die Wecksignale erzeugenden Quellen möglich.

Des Weiteren ist es vorteilhaft die Eingänge logisch über eine ODER-Verknüpfung miteinander zu verbinden. Hierdurch wird eine Erweiterungsfähigkeit der Vorrichtung auf mehrere Quellen gewährleistet, ohne Erhöhung des Ruhestrombedarfs.

Eine vorteilhafte Ausgestaltung ermöglicht eine Zuordnung eines Wecksignals zu einem Eingang. Hierdurch wird dem Steuergerät die Information zur Verfügung gestellt, welche Quelle das Wecken veranlasst hat.

Ausführungsbeispiele der Erfindung werden im Folgenden anhand der schematischen Zeichnungen erläutert. Es zeigen:
- Figur 1: ein Steuergerät mit einer Vorrichtung zum Wecken,
- Figur 2: ein Schaltplan einer Vorrichtung zum Wecken und
- Figur 3: ein Schaltplan einer Vorrichtung zum Wecken mit mehreren Eingängen.

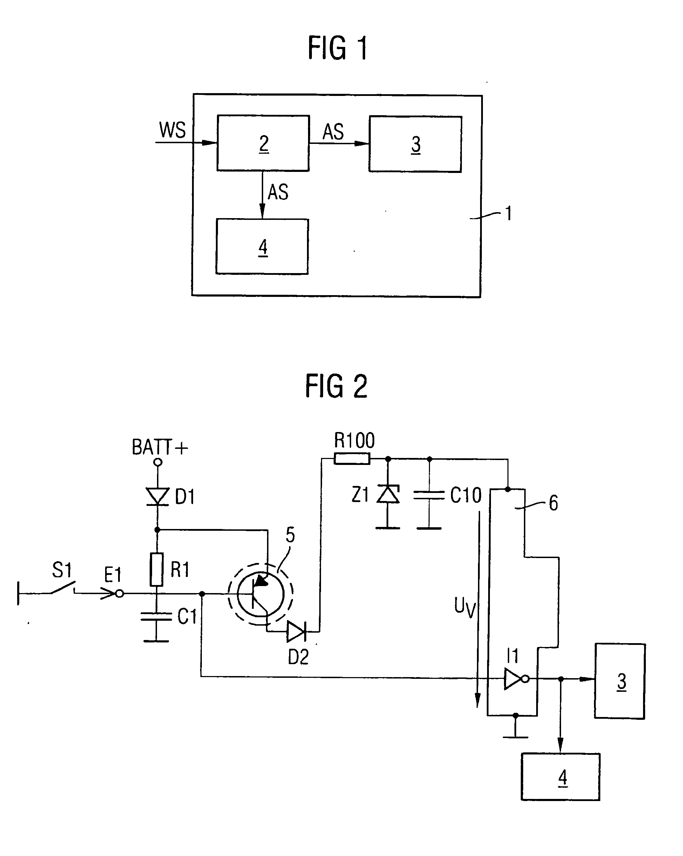

Figur 1 zeigt ein Steuergerät 1, welches eine Vorrichtung zum Wecken 2 des Steuergerätes 1, einen Mikrocontroller 3 und ein Netzteil 4 umfasst. Der Vorrichtung zum Wecken 2 wird ein externes Wecksignal WS zugeführt. Das Wecksignal WS kann z. B. von einem anderen im Kraftfahrzeug vorhandenen Steuergerät erzeugt werden. Nach der Zuführung des Wecksignals WS wird in der Vorrichtung zum Wecken 2 ein Ausgangssignal AS generiert, welches dem Mikrocontroller 3 und dem Netzteil 4 zugeführt wird. Durch das Ausgangssignal AS wird sowohl der Mikrocontroller 3 als auch das Netzteil 4 aktiviert und somit das Steuergerät 1 von einem Ruhezustand in einen Betriebszustand versetzt.

In Figur 2 ist ein Schaltplan einer Vorrichtung zum Wecken 2 des Steuergerätes 1 dargestellt. In diesem Beispiel weist die Vorrichtung zum Wecken 2 einen Eingang E1 zur Zuführung des Wecksignals WS auf, wobei das Wecksignal WS erzeugt wird indem ein Schalter S1 den Eingang E1 mit der Masse verbindet. Falls das Wecksignal WS dem Eingang E1 zugeführt wird und der Eingang E1 somit Massepotential aufweist, schaltet ein Schaltmittel 5 durch, d. h., es wechselt von einem hochohmigen in einen niederohmigen Zustand. Das Schaltmittel 5 wird durch einen Transistor (pnp-Transistor) realisiert. Das Wecksignal WS wird einer Basis des Transistors zugeführt, wogegen ein Emitter über eine Diode D1 mit einem Pluspol BATT+ einer in dem Fahrzeug vorhandenen Batterie oder eines Akkumulators verbunden ist. Hierdurch wird der Transistor in einen leitenden Zustand versetzt und einem integrierten Schaltkreis 6 über eine Diode D2 und einen Widerstand R100 eine Versorgungsspannung Uv zur Verfügung gestellt. Mit Hilfe einer Zenerdiode Z1 kann die Höhe der Versorgungsspannung Uv variiert werden. Ein Kondensator C10 dient zur Glättung der Versorgungsspannung Uv.

Durch die Zuführung der Versorgungsspannung Uv wird der integrierte Schaltkreis 6 und somit auch eine von dem integrierten Schaltkreis 6 umfasste Teilschaltung 11 aktiviert. Diese Teilschaltung 11 weist einen Inverter 11 auf. Der Inverter 11 ist somit ein Bestandteil des integrierten Schaltkreises 6. Mit dem Inverter 11 wird ein Schmitt-Trigger realisiert.

Das Wecksignal WS wird auf einen Eingang des Inverters 11 geführt. Hierdurch nimmt ein Ausgang des Inverters 11 einen logischen High-Pegel an. Dieser High-Pegel entspricht z. B. einer Spannung von 5 V. Dieses Ausgangssignal des Inverters 11 entspricht dem Ausgangssignal AS der Vorrichtung zum Wecken 2. Das Ausgangssignal AS wird dem Mikrocontroller 3 und dem Netzteil 4 zugeführt. Hierdurch werden Netzteil 4 und Mikrocontroller 3 aktiviert und somit das Steuergerät 1 von einem Ruhezustand in einen Betriebszustand versetzt. Wenn der Schalter S1 geöffnet ist, sperrt der Transistor und die Versorgungsspannung Uv des integrierten Schaltkreises 6 beträgt 0 V. Somit nimmt das Ausgangssignal AS einen Wert von 0 V an, weder der Mikrocontroller 3 noch das Netzteil 4 werden aktiviert und es findet kein Wecken des Steuergerätes 1 statt. Die Schaltung weist den Vorteil eines sehr geringen Ruhestrombedarfs auf, da die Versorgungsspannung Uv des integrierten Schaltkreises 6 in der Ruhephase 0 V beträgt. Zweckmäßigerweise wird der integrierte Schaltkreis 6 durch ein CMOS-Logikbaustein, wie z. B. 40106, realisiert, um den Strombedarf zu minimieren und Kosten zu sparen. Die Schaltschwellen des Inverters 11, und somit auch die des Schmitt-Triggers, können über die Höhe der Versorgungsspannung Uv des integrierten Schaltkreises 6 eingestellt werden. Die Versorgungsspannung Uv kann mit der Zenerdiode Z1 variiert werden. Ein mit dem Eingang E1 verbundener Widerstand R1 und Kondensator C1 dienen zur Erhöhung der Betriebssicherheit der Schaltung.

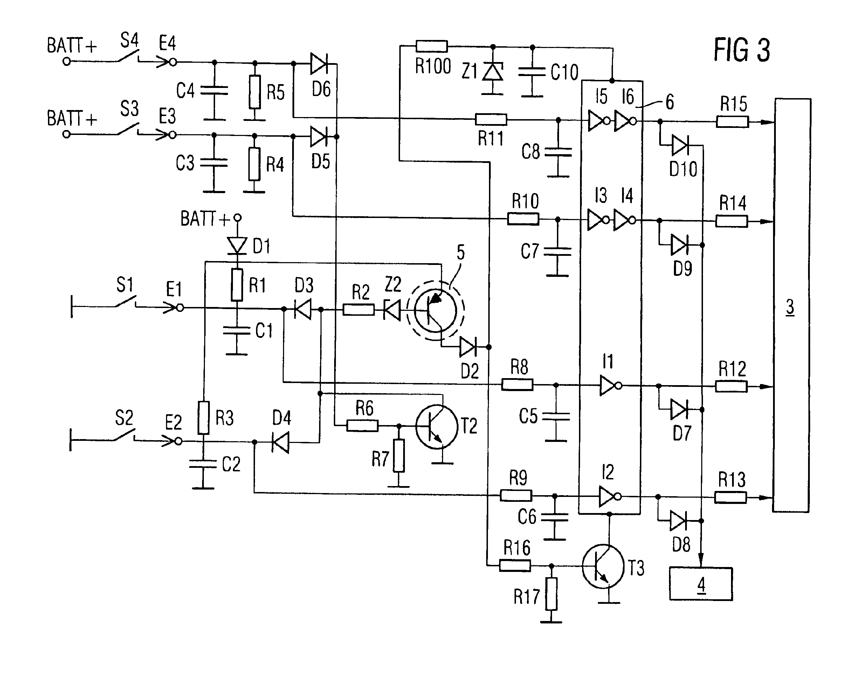

In Figur 3 ist ein Schaltbild einer Vorrichtung zum Wecken 2 gezeigt, die vier Eingänge E1 bis E4 umfasst über die externe Wecksignale WS zugeführt werden können. Analog zu der in Figur 2 gezeigten Schaltung, werden den Eingängen E1 und E2 Wecksignale WS zugeführt indem die Eingänge E1 und E2 über Schalter S1 und S2 mit Masse verbunden werden. Dagegen erfolgt die Zuführung der Wecksignale WS bei den Eingängen E3 und E4 über Schalter, welche die Eingänge E3 und E4 mit dem Pluspol BATT+ einer im Kraftfahrzeug vorhandenen Batterie oder eines Akkumulators verbinden. Wenn ein Wecksignal WS an einem der beiden Eingänge E3 oder E4 anliegt, wird ein Transistor T2 durchgeschaltet, wodurch auch das Schaltmittel 5 in den leitenden Zustand versetzt und dem integrierten Schaltkreis 6 die Versorgungsspannung Uv zugeführt wird. Über die Dioden D3 bis D6 erfolgt eine logische ODER-Verknüpfung der Eingänge E1 bis E4, d. h., ein Wecksignal WS an einem Eingang E1 bis E4 ist ausreichend, um das Steuergerät 1 von einem Ruhezustand in einem Betriebszustand zu versetzen.

Die Wecksignale WS aller Eingänge E1 bis E4 werden Invertern 11 bis 16, die wiederum Schmitt-Trigger realisieren, zugeführt, wobei die an den Eingängen E3 und E4 anliegenden Wecksignale WS zwei in Reihe geschalteten Invertern 13, 14 und 15, 16 zugeführt werden, um den Mikrocontroller 3 und das Netzteil 4 mit logischem High-Pegel beaufschlagen zu können. Sämtliche Inverter 11 bis 16 sind Teilschaltungen des integrierten Schaltkreises 6. Die Ausgangssignale der Inverter I1, 12, 14 und 16 stellen die Ausgangssignale AS der Vorrichtung zum Wecken 2 dar und werden dem Mikroprozessor 3 getrennt über separate Eingänge und dem Netzteil 4 über Dioden D7 bis D10, die eine logische ODER-Verknüpfung realisieren, zugeführt. Hierdurch wird eine Zuordnung des Wecksignals WS zu den Eingängen E1 bis E4 möglich, d. h., es kann eine Auswertung im Mikrokontroller 3 erfolgen über welchen Eingang E1 bis E4 das Wecksignal WS zugeführt wurde.

Zwischen der Masse und dem integrierten Schaltkreis 6 ist ein Transistor T3 geschaltet. Durch diese Maßnahme wird der Ruhestrombedarf der Vorrichtung zum Wecken 2 reduziert. Folgend genannte Bauteile R1 bis R17, C1 bis C8 und Z2 dienen zur Erhöhung der Betriebssicherheit der gezeigten Schaltung. Diese Vorrichtung zum Wecken 2 weist die Vorteile auf, dass die Zuführung von Wecksignalen WS über mehrere Eingänge E1 bis E4 erfolgen kann und eine Zuordnung der Wecksignale WS zu den Eingängen E1 bis E4 durchführbar ist, ohne das der Ruhestrombedarf gegenüber einer Vorrichtung zum Wecken 2 mit nur einem Eingang E1 erhöht wird. Ferner kann die Vorrichtung zum Wecken 2 einfach erweitert werden, ohne den Ruhestrombedarf zu erhöhen, indem die Anzahl der Eingänge E1 bis E4 in dargelegter Weise durch logische ODER-Verknüpfungen erhöht wird.

## Patentansprüche

1. Vorrichtung zum Wecken (2) eines in einem Kraftfahrzeug eingesetzten Steuergerätes (1), um dieses von einem Ruhezustand in einen Betriebszustand zu versetzen, wobei die Vorrichtung (2) zumindest einen Eingang (E1, E2, E3, E4) zur Zuführung eines Wecksignals (WS) und ein Schaltmittel (5) aufweist, wobei bei Zuführung des Wecksignals (WS) das Schaltmittel (5) eine Versorgungsspannung (Uv) für einen der Vorrichtung (2) zugehörigen integrierten Schaltkreis (6) zur Verfügung stellt, wobei eine Teilschaltung (11, 12, 13, 14, 15, 16) vorhanden ist, die mit dem Eingang (E1, E2, E3, E4) mit oder ohne Zwischenschaltung von Bauelementen verbunden ist und diese Teilschaltung (11, 12, 13, 14, 15, 16) bei Zuführung des Wecksignals (WS) ein Ausgangssignal (AS) zur Verfügung stellt, welches das Steuergerät (1) in den Betriebszustand versetzt, **dadurch gekennzeichnet, dass** der integrierte Schaltkreis (6) die Teilschaltung (I1, 12, 13, 14, 15, I6I aufweist, und dass das Wecksignal (WS) durch einen Schalter (S1, S2, S3, S4) realisiert ist, der den Eingang (E1, E2, E3, E4) mit einem negativen oder einem positiven Pol (BATT+) einer in dem Kraftfahrzeug vorhandenen Batterie verbindet.

2. Vorrichtung (2) nach Anspruch 1, **dadurchgekennzeichnet**, dass die Teilschaltung (I1, 12, 13, 14, 15, 16) des integrierten Schaltkreises (6) zumindest einen Inverter (I1, I2, 13, 14, 15, 16) aufweist.

3. Vorrichtung (2) nach einem der vorstehenden Ansprüche, **dadurch gekennzeichnet, dass** die Teilschaltung (I1, 12, 13, 14, I5, 16) des integrierten Schaltkreises (6) die Funktion eines Schmitt-Triggers realisiert.

4. Vorrichtung (2) nach Anspruch 3, **dadurch gekennzeichnet, dass** eine Einstellung von Schaltschwellen des Schmitt-Triggers durch die Höhe der Versorgungsspannung (Uv) des integrierten Schaltkreises (6) erfolgt.

5. Vorrichtung (2) nach einem der vorstehenden Ansprüche, **dadurch gekennzeichnet, dass** der integrierter Schaltkreis (6) durch einen Logikbaustein realisiert ist.

6. Vorrichtung (2) nach einem der vorstehenden Ansprüche, **dadurch gekennzeichnet, dass** der integrierter Schaltkreis (6) CMOS-Schaltungen umfasst.

7. Vorrichtung (2) nach einem der vorstehenden Ansprüche, **dadurch gekennzeichnet, dass** das Schaltmittel (5) durch einen Transistor realisiert ist.

8. Vorrichtung (2) nach einem der vorstehenden Ansprüche, **dadurch gekennzeichnet, dass** die Vorrichtung (2) mehrere Eingänge (E1, E2, E3, E4) zur Zuführung mehrerer Wecksignale (WS) umfasst.

9. Vorrichtung (2) nach Anspruch 8, **dadurchgekennzeichnet**, dass die Eingänge (E1, E2, E3, E4) logisch über eine ODER-Verknüpfung verbunden sind.

10. Vorrichtung (2) nach einem der vorstehenden Ansprüche 8 oder 9, **dadurch gekennzeichnet, dass** eine Zuordnung eines Wecksignals (WS) zu einem Eingang (E1, E2, E3, E4) möglich ist.

## Claims

1. Apparatus for waking up (2) a control device (1) used in a motor vehicle in order to transfer the control device from a quiescent state to an operating state, the apparatus (2) having at least one input (E1, E2, E3, E4) for supplying a wake-up signal (WS) and a switching means (5), the switching means (5) providing a supply voltage (Uv) for an integrated circuit (6) associated with the apparatus (2) during supply of the wake-up signal (WS), a subcircuit (I1, 12, 13, 14, I5, 16) being provided and being connected to the input (E1, E2, E3, E4) with or without the interposition of components, and this subcircuit (I1, 12, 13, 14, I5, 16) providing an output signal (AS) during supply of the wake-up signal (WS), which output signal transfers the control device (1) to the operating state, **characterized in that** the integrated circuit (6) has the subcircuit (I1, 12, 13, 14, I5, 16), and **in that** the wake-up signal (WS) is implemented by means of a switch (S1, S2, S3, S4) which connects the input (E1, E2, E3, E4) to a negative or positive pole (BATT+) of a battery present in the motor vehicle.

2. Apparatus (2) according to Claim 1, **characterized in that** the subcircuit (I1, 12, 13, 14, I5, 16) of the integrated circuit (6) has at least one inverter (I1, 12, 13, 14, I5, 16).

3. Apparatus (2) according to one of the preceding claims, **characterized in that** the subcircuit (I1, 12, 13, 14, I5, 16) of the integrated circuit (6) implements the function of a Schmitt trigger.

4. Apparatus (2) according to Claim 3, **characterized in that** switching thresholds of the Schmitt trigger are set by means of the level of the supply voltage (Uv) of the integrated circuit (6).

5. Apparatus (2) according to one of the preceding claims, **characterized in that** the integrated circuit (6) is implemented by means of a logic module.

6. Apparatus (2) according to one of the preceding claims, **characterized in that** the integrated circuit (6) comprises CMOS circuits.

7. Apparatus (2) according to one of the preceding claims, **characterized in that** the switching means (5) is implemented by means of a transistor.

8. Apparatus (2) according to one of the preceding claims, **characterized in that** the apparatus (2) comprises a plurality of inputs (E1, E2, E3, E4) for supplying a plurality of wake-up signals (WS).

9. Apparatus (2) according to Claim 8, **characterized in that** the inputs (E1, E2, E3, E4) are logically connected by means of an OR operation.

10. Apparatus (2) according to either of the preceding Claims 8 or 9, **characterized in that** it is possible to assign a wake-up signal (WS) to an input (E1, E2, E3, E4).

## Revendications

1. Dispositif pour réveiller (2) un appareil (1) de commande utilisé dans un véhicule automobile afin de le faire passer d'un état de repos à un état de fonctionnement, le dispositif (2) ayant au moins une entrée (E1,E2,E3,E4) pour l'amenée d'un signal (WS) de réveil et un moyen (5) de commutation, dans lequel, lors de l'amenée du signal( WS) de réveil, le moyen (5) de commutation met à disposition une tension (Uv) d'alimentation d'un circuit (6) intégré faisant partie du dispositif (2), dans lequel il y a un sous-circuit (I1,I2,I3,I4,I5,I6) qui est relié à l'entrée (E1,E2,E3,E4) avec ou sans interposition de composants et ce sous-circuit (I1,I2,I3,I4,I5,I6) met, lors de l'amenée du signal (WS) de réveil, à disposition un signal (AS) de sortie qui fait passer l'appareil (1) de commande dans l'état de fonctionnement, **caractérisé en ce que** le circuit (6) intégré comporte le sous-circuit (I1,I2,I3,I4,I5,I6) et **en ce que** le signal (WS) de réveil est réalisé par un interrupteur (S1,S2,S3,S4) qui relie l'entrée (E1,E2,E3,E4) à un pôle (BATT+) négatif ou positif d'une batterie présente dans le véhicule automobile.

2. Dispositif (2) suivant la revendication 1,
**caractérisé en ce que** le sous-circuit (I1,I2,I3,I4,I5,I6) du circuit (6) intégré a au moins un inverseur (I1,I2,I3,I4,I5,I6).

3. Dispositif (2) suivant l'une des revendications précédentes,
**caractérisé en ce que** le sous-circuit (I1,I2,I3,I4,I5,I6) du circuit (6) intégré réalise la fonction d'une bascule de Schmitt.

4. Dispositif (2) suivant la revendication 3,
**caractérisé en ce qu'**un réglage du seuil de commutation de la bascule de Schmitt s'effectue par le niveau de la tension (Uv) d'alimentation du circuit (6) intégré.

5. Dispositif (2) suivant l'une des revendications précédentes,
**caractérisé en ce que** le circuit (6) intégré est réalisé par un module logique.

6. Dispositif (2) suivant l'une des revendications précédentes,
**caractérisé en ce que** le circuit(6) intégré comprend des circuits CMOS.

7. Dispositif (2) suivant l'une des revendications précédentes,
**caractérisé en ce que** le moyen (5) de commutation est réalisé par un transistor.

8. Dispositif (2) suivant l'une des revendications précédentes,
**caractérisé en ce que** le dispositif (2) comprend plusieurs entrées (E1,E2,E3,E4) pour l'amenée de plusieurs signaux (WS) de réveil.

9. Dispositif (2) suivant la revendication 8,
**caractérisé en ce que** les entrées (E1,E2,E3,E4) sont reliées logiquement par une porte logique OU.

10. Dispositif (2) suivant l'une des revendications précédentes 8 ou 9,
**caractérisé en ce qu'**une affectation d'un signal (WS) de réveil à une entrée (E1,E2,E3,E4) est possible.
